Europäisches Patentamt

European Patent Office

Office européen des brevets

(19)

(11) Publication number: **0 138 565**
A2

# (12) EUROPEAN PATENT APPLICATION

(21) Application number: **84306897.4**

(22) Date of filing: **10.10.84**

(51) Int. Cl.⁴: **B 27 F 7/13**

(30) Priority: **14.10.83 US 542012**

(43) Date of publication of application: **24.04.85**
Bulletin 85/17

(84) Designated Contracting States: **DE FR GB IT**

(71) Applicant: **THE BRITISH UNITED SHOE MACHINERY COMPANY LIMITED, Union Works Belgrave Road, Leicester LE4 5BX (GB)**

(84) Designated Contracting States: **GB**

(71) Applicant: **USM Corporation, 426 Colt Highway, Farmington Connecticut 06032 (US)**

(84) Designated Contracting States: **DE FR IT**

(72) Inventor: **Karcher, Ralph Everett, Jr., Hesperus Avenue, Magnolia Massachusetts (US)**

(74) Representative: **Atkinson, Eric et al, USMC International Limited Patents Department P.O. Box No. 88 Belgrave Road, Leicester LE4 5BX (GB)**

(54) **Nailing machine.**

(57) A heel nailing machine has a plurality of feed tubes (14 to 24) through which nails can be fed one by one from a nail separating station (12) to a receiving block (26) for transfer by a so-called nail loader (40) to a nailing station (36). Each tube has a nail sensor (46) for optically sensing the passage of nails therealong. Each sensor (46) generates a signal in response to the passage of a nail and this signal illuminates one of an array of lights (108 to 118) to indicate the presence of a nail. In the event that no nail is present at any one location the light associated therewith is not illuminated and in addition an alarm (122, 124) is operated. For enabling the sensing means to operate in different environments compensating means (66, 67) is provided for compensating changes in sensitivity of each sensor (46).

## NAILING MACHINE

This invention is concerned with nailing machines comprising nail transfer means for transferring nails from a first station to a second station, the nails being arranged in a nailing pattern at said second station.

The processing of nails within high speed nailing machinery has at times proved troublesome. The flow of nails within such machinery has sometimes been disrupted by various mechanical interferences within the machine itself. On the other hand, the nails themselves have sometimes proved troublesome because of their inherent size variations and other imperfections which tend to defeat completely reliable automatic processing.

The above problems have been particularly noted within machines which attach heels to the bottoms of shoes in the shoe making process. In these machines, nails are typically fed from a hopper to an area wherein the nails are arranged in a predefined pattern for attachment of a heel to the shoe bottom. The thus arranged nails are subsequently driven into both the bottom of the shoe as well as the heel which has been positioned thereover. It has been noted that nails are sometimes missing from the shoe parts that have been thus nailed together. This either requires a manual correction or a complete discarding of the assembled shoe parts.

It is the object of the present invention to provide an improved nailing machine in which problems arising because of the incorrect transfer of nails from the first station to the second station are overcome. This object is resolved in accordance with the present invention, in a machine as set out in the first paragraph above, by the provision of nail sensing means for sensing the passage of nails from the first station to the second station, and alerting means for alerting the operator of the machine at a predetermined time during the machine operation when the passage of a nail has not previously been sensed by the nail sensing means.

It will thus be appreciated that, using the machine in accordance with the invention, not only is a malfunction of the nail transfer means sensed, but further such malfunction is brought to the attention of the operator, so that he can take remedial action before the consequences of such malfunction are of any effect.

As will be hereinafter described in detail, in one embodiment of the nailing machine in accordance with the invention the first station is constituted by a nail separating station by which nails can be supplied, one by one, to a plurality of raceways or the like, while the second station is constituted by a receiving device from which the nails can be further transferred, e.g. by a so-called nail loader, to a nailing station. As is typical of machines of this type, the nails are arranged in the nailing pattern upon arrival at the receiving device, and are maintained in said pattern during their transfer to the nailing station as aforesaid.

In said one embodiment, furthermore, preferably nails are transferred from the nail separating station to the nailing station, and are driven into the workpiece at said station, in a single cycle of operation of the machine. In such a case, furthermore, preferably the predetermined time referred to occurs prior to a nailing operation of the machine utilising the particular transfer of nails from the first station to the second station.

Bearing in mind that the nails are maintained in the nailing pattern during the transfer referred to above, it is furthermore considered useful in a machine in accordance with the invention to provide indicating means for indicating to the operator at which location in the nailing pattern a nail is missing. The provision of such indicating means, the operator can readily manually place a nail in the location indicated prior to initiation of the nailing operation, thereby enabling the nailing operation to take place without the malfunction of the nail transfer means being of consequence. Conveniently the indicating means comprises an array of lights arranged in the same configuration as the nailing pattern and the nailing station. Thus, in the case of a nail which is present in the nailing pattern, the corresponding light will be illuminated, but in the event of one of the nails being absent, the light corresponding to the location at which such nail is missing will remain unilluminated, thereby indicating to the operator at which location the nail is missing.

The nail transfer means of the machine in accordance with the invention preferably comprises, as is conventional in nailing machines, a plurality of feed tubes defining individual paths for each of a plurality of nails being transferred as aforesaid. Furthermore, in the machine in accordance with the invention, the nail sensing means preferably comprises a plurality of sensors one associated with each of the feed tubes. In this way, the passage of nails down each of the feed tubes can be sensed concurrently as they pass to the second station, the absence of any one nail being sufficient to cause the alerting means and the indicating means to be actuated.

Each nail sensor, furthermore, preferably comprises optical sensing means and means, responsive to the optical sensing means sensing the passage of a nail, for generating an electrical pulse signal indicative of such passage. More particularly, the optical sensing means may comprise a light-emitting diode and a photosensitive transistor, positioned diametrically opposite one another along the length of the feed tube, while said means for generating a signal comprises an amplifier. In operation, interruption of the beam emitted by the diode is effective to cause a voltage spike to be produced by the transistor which is sensed by the amplifier and in response to which the amplifier generates the electrical pulse signal.

In some instances the sensitivity of the optical sensing means may vary. Such variation may be occasioned by the environment in which the sensing means is located. To counter any adverse effect from such change in sensitivity, therefore, the nail sensing means preferably further comprises means for compensating for changes in the sensitivity of the optical sensing means. Such means is preferably electrical and may comprise a field effect transistor the conductivity of which is inversely proportional to the resistance of the photosensitive transistor of the optical sensing means, and thus compensates for change in the conductivity thereof.

The machine in accordance with the invention preferably further comprises accounting means, responsive to the sensing of the passage of nails by the nail sensing means, for accounting for each nail that is to be present in the nailing pattern and effective to cause the alerting means to be actuated when at least one nail is not accounted for thereby before said predetermined time. Conveniently, furthermore, the accounting means preferably comprises means, responsive to each electrical pulse signal generated by the nail sensing means, for generating a further electrical signal and supplying it to the alerting means. Conveniently, the generating means of the accounting means comprises, for each feed tube, an amplifier to which electrical pulse signals are supplied, together with corresponding latch circuits which can be cleared once in each cycle of operation of the machine.

The alerting means of the machine in accordance with the invention preferably comprises means for checking each further electric signal at the predetermined time in the machine operation, and also means for exciting an alarm when a further electrical signal indicates that the passage of a nail through its feed tube has not been sensed. The checking means of the alerting means is conveniently in the form of a plurality of flip-flops, one associated with each nail sensor. In the event of the passage of a nail being sensed, the flip-flops supply signals appropriately to the lights forming part of the indicating means, but, in the absence of any one nail, are effective to actuate the alarm exciting means. The alarm may be a visual alarm or an audio alarm, or indeed both.

In the operation of the machine in accordance with the invention, the passage of a nail within a given feed tube is optically sensed by a nail sensor mounted on that tube. The sensor produces an electrical pulse signal indicative of the passage of the nail through the tube. The signals from the nail sensors are applied to circuitry which compensates for any drift in these signals. Further circuitry processes the signals in such a manner as to maintain an accurate accounting of whether or not a pulse has actually been timely produced by a sensor. In the events that a pulse has not been timely produced, the circuitry will alert the operator of the machine that one or more nails are missing. This alerting takes place when the nail loader has received nails from the various feed tubes, via the receiving device, and is moving towards the nailing station. Conveniently the actuation of the electrical circuit takes place in response to such movement of the nail loader being initiated. In addition, the indicating means indicates to the operator at which of the locations in the nailing pattern the nail or nails are missing. In this way, the operator of the machine can easily identify where a nail needs to be manually inserted at the nailing station. Furthermore, the timing of the alerting means being actuated is such that the operator can insert the nails as aforesaid prior to initiation of a nailing operation.

The above and other features of the invention will become clearer from the following description, to be read with reference to the accompanying drawings, of one nailing machine in accordance with the invention. It will of course be appreciated that this machine has been selected for description merely by way of non-limiting example.

In the accompanying drawings:-

Figure 1 shows nail transfer means of the machine, together with nail sensing means and associated parts;

Figure 2 is a fragmentary view of a nail sensor of the nail sensing means;

Figure 3 is a diagram showing circuitry associated with the nail sensor;

Figure 4 shows circuitry by which signals supplied by the circuitry of Figure 3 are processed to alert the operator, where necessary, when one or more nails are missing; and

Figure 5 is a timing diagram relating to various signals produced by the circuitry of Figure 4.

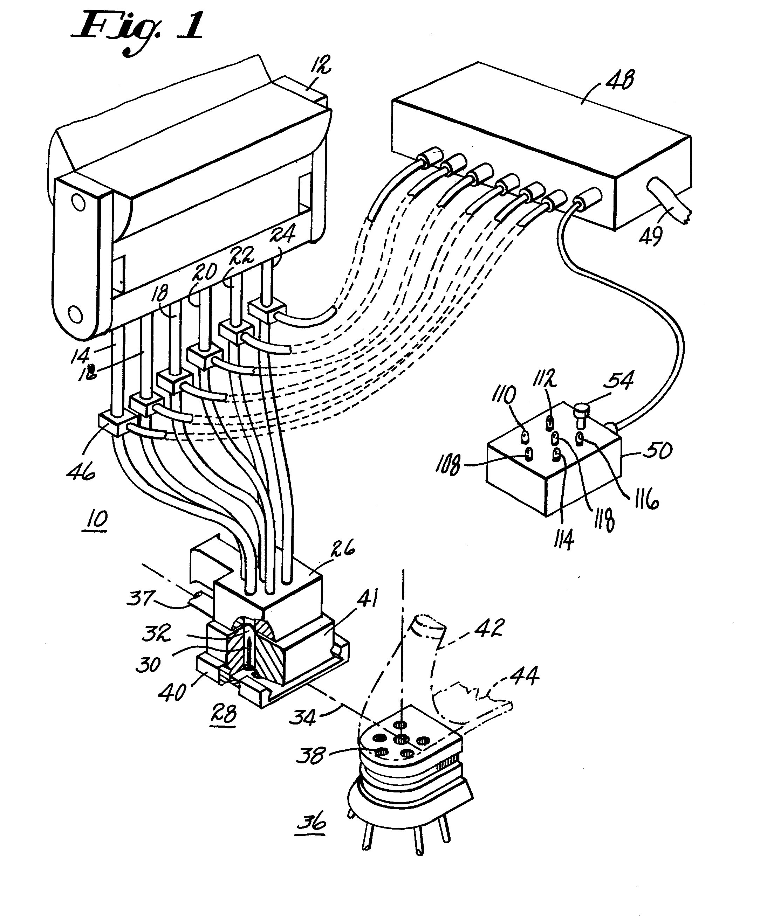

The machine in accordance with the invention now to be described is a heel nailing machine by which heels 42 can be nailed to the bottom of 44 of a shoe by driving the nails through the shoe bottom into the heel, as indicated in chain-dot line in Figure 1. The machine thus comprises a nail feeding system 10 comprising a nail separating station 12 which upon command drops one nail into each of a plurality of feed tubes 14,16,18,20,22,24 of translucent plastics material which allows detection of a nail passing therethrough, in a manner which will be described hereinafter. Each feed tube delivers a nail to a respective position within a receiving block 26 which defines the nailing pattern for the thus received nails. The receiving block 26 thereafter drops the arranged pattern of nails into appropriately positioned channels 32 in a nail loader 28. The nail loader 28 is movable along an axis 34 by a pneumatic actuator (a drive member 37 of which is shown in Figure 1) actuated following the receipt of nails from the receiving block 26, from the illustrated position underneath the receiving block 26 to a position directly over a nailing station 36, so as to deliver the nails to the nailing station 36. The nailing station 36 includes a plurality of nail-receiving holes 38 arranged in accordance with the pattern of nails within the nail loader. The nail loader 28 includes a bottom member 40 which is slidable relative to an upper portion 41 thereof. As the nail loader moves over the nailing station, a pin (not shown) extending downwardly from the bottom member 40 contacts the nailing station 36, arresting the movement of the bottom member 40. At this time, holes within the bottom member 40 are aligned with the receiving holes 38 in the nailing station. The upper portion 41 of the nail loader continues to move a finite distance relative to the bottom member 40 so as to bring the channels 32 into alignment with the holes in the bottom member 40 so that the nails within the channels 32 drop through the holes in the bottom member into the holes 38 of the nailing station. The nail loader 28 is then retracted to its illustrated position underneath the receiving block 26, the bottom member 40 returning to its initial position.

It is to be appreciated that the above nail transfer system is currently embodied in commercially available nailing machines, e.g. so-called heel attaching machines by which a heel 42 is attached to the bottom of a shoe 44. In such machines, furthermore, the heel 42 and the shoe bottom 44 are positioned over the nailing station 36 (see Figure 1) after the nail loader 28 has deposited a pattern of nails and has been retracted. When the shoe parts have been thus positioned, pneumatic nail drivers within the nailing station 36 drive the nails through the shoe bottom 44 and into the heel 42.

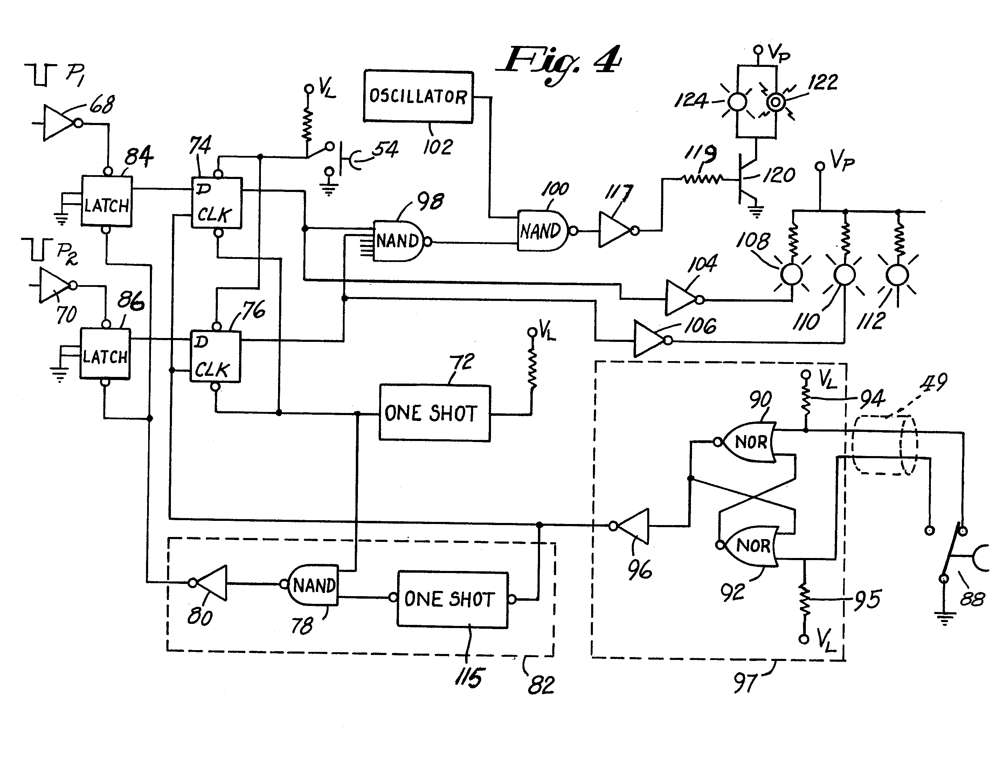

The nail feeding system 10 in accordance with the present invention comprises also means for detecting the passage of tacks along the feed tubes 14 to 24 and to this end each feed tube has associated therewith a nail sensor 46 which provides an electrical pulse signal to a nail pattern sensing system 48 indicating when a nail has passed through its respective tube. The nail pattern sensing system 48 processes the electrical pulse signals and, in the event that one or more nails are missing from a given pattern of nails transferred to the nail loader 28, alerts the operator by a flashing light 122 and a buzzer 124 (see Figure 4) appropriately placed on the nailing machine. Such alerting does not take place until the nail loader 28 begins to move toward the nailing station 36, in response to sensing the status of the pneumatic pressure in the pneumatic actuator which moves the nail loader 28 toward the nailing station. To this end a pressure-sensitive switch 88 (see Figure 4) is provided in the pneumatic line associated with the pneumatic actuator, the status of this switch being signalled to the pattern sensing system 48 via an electrical cable 49, as will be described hereinafter. Instead of the pressure switch 88 a limit switch could be used which would detect relative movement between the bottom and top members of the nail loader at such time as the nails were being transferred to the nailing station 36, such detection serving to trigger the remaining circuitry of the system.

Information as to which nail is missing in the pattern is also indicated to the operator via a display panel 50. The display panel 50 provides a pattern of coloured lights 108, 110, 112, 114, 116, 118 arranged in the same configuration as the nail pattern and oriented in the same manner as the pattern of holes 38 at the nailing station. In operation, a display light occupying the same location as a given hole in the nailing station will not be illuminated in the absence of a nail for transfer thereto, such display occurring simultaneously with the flashing light and buzzer. This allows the operator to manually place the missing nail into its hole in the nailing station before placing the shoe parts on the nailing station. A reset button 54 for resetting the pattern of lights is provided on the display panel 50.

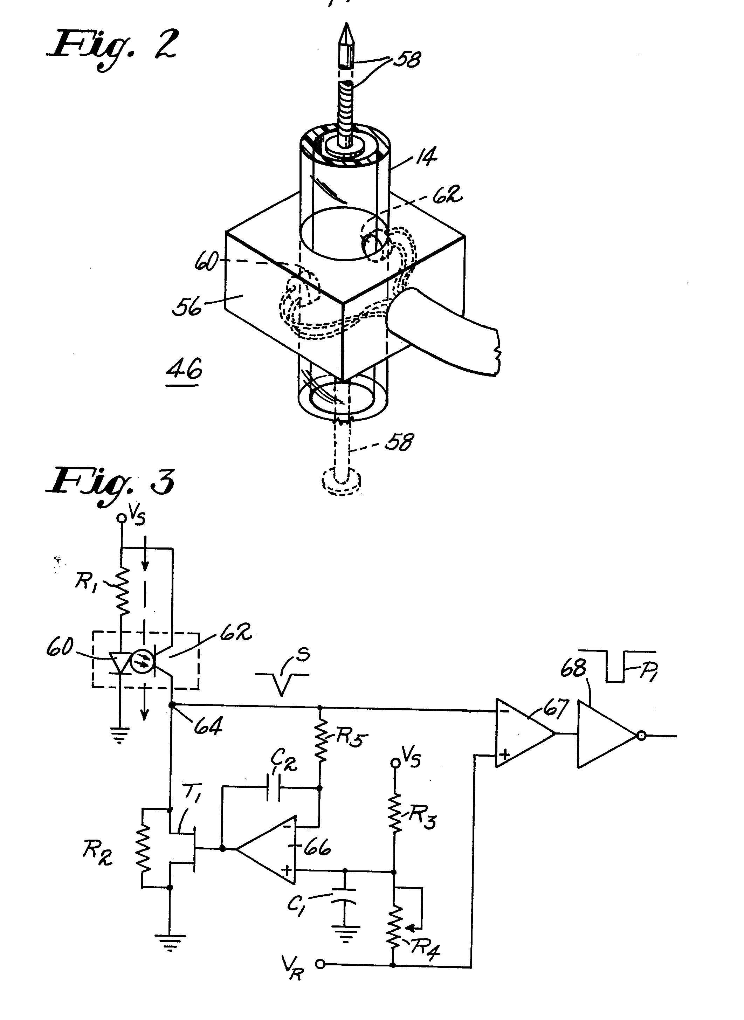

Referring now to Figure 2, each nail sensor 46 comprises a square plastic block 56 having a circular hole therein which receives one end of the translucent plastic feed tube 14. The passage of nails 58 through the nail sensor 46 is sensed by the interruption of a beam of light from a light-emitting diode 60 positioned diametrically opposite a photosensitive transistor 62. The radius of the circular hole is at least ten percent smaller than the smallest diameter nail head which passes through the feed tube, ensuring that the beam of light, which passes through the centre of the circular hole, will be interrupted.

For operating the light-emitting diode 60 and the photosensitive transistor 62 a 12 volt circuit is provided supplied from a positive voltage source $V_s$. The circuit also has a resistor $R_1$, defining the current path through the light-emitting diode 60 to earth, and a field effect transistor $T_1$ in parallel with a resistance $R_2$, defining the normal current path through the photosensitive transistor 62 to earth.

A normal quiescent voltage condition at a point 64 downstream of the photosensitive transistor 62 is defined by circuitry which will now be described. A differential operational amplifier 66 receives at its non-inverting input a predefined voltage defined by a voltage-dividing circuit comprising a resistance $R_3$ in combination with a variable resistance $R_4$ situated between the voltage supply $V_s$ and a reference voltage $V_R$. The reference voltage $V_R$ is preferably plus four volts and the variable resistor $R_4$ is set so as to define a voltage of 4.1 volts at the non-inverting input of the operational amplifier 66. This differential setting of the operational amplifier need not be further adjusted after the initial setting because of the feedback nature of the circuitry associated with the amplifier 66. This feedback will be discussed hereinafter. A capacitor $C_1$ filters any noise in the voltage dividing circuit so as to ensure a steady state voltage of 4.1 volts at all times. The output of the operational amplifier 66 is connected to the field effect transistor $T_1$ as shown. The field effect transistor $T_1$ has a relatively high gain so as to become increasingly conductive as a result of any decrease in the output voltage from the operational amplifier 66 and less conductive when the output voltage of the operational amplifier 66 increases. This change in conductivity of the field effect transistor $T_1$ immediately affects the voltage at the quiescent point 64 which in turn is applied to the inverting input of the operational amplifier. The high gain characteristic of the field effect transistor $T_1$ thus results in negligible current flowing through a resistance $R_5$ between the quiescent point 64 and the inverting input. A capacitor $C_2$ connected between the output of the operational amplifier 66 and the inverting input combines with the resistance $R_5$ to define a time constant for the responsiveness of the operational amplifier configuration to any change in the quiescent voltage condition at the point 64. In particular, the time constant is defined in such a manner so as to not allow the operational amplifier configuration to respond to any quick change in the voltage condition occurring at point 64. In other words, an electrical pulse produced by a nail interrupting the beam of light being sensed by the photosensitive transistor 62 would not produce a response at the output of the operational amplifier 66 which would affect the field effect transistor $T_1$. On the other hand, any slow change in the voltage at point 64 would be responded to by the operational amplifier configuration. For instance, if the translucent nature of the tube 14 changes so as to result in less light being sensed by the phototransistor 62, then the resistance of the phototransistor would increase thereby tending slowly to lower the quiescent voltage at the point 64. This lowered voltage would produce a lower voltage at the inverting input of the operational amplifier 66. This lowering of the voltage at the non-inverting input would result in an increase in the output voltage of the operational amplifier. This would cause a decrease in the conductivity of the field effect transistor $T_1$ thereby raising the effective resistance of the field effect transistor $T_1$. This would raise the resistance of the field effect transistor $T_1$ in parallel with the resistance $R_2$ so as to thereby maintain the same ratio between the resistance downstream of the point 64 with respect to the resistance of the phototransistor 62 upstream of the point 64. In other words, any slow change in the quiescent voltage at the point 64 would cause the operational amplifier 66 to drive the field effect transistor $T_1$ in the appropriate direction so as to compensate for the change in conductivity of the photosensitive transistor 62. In this manner, the quiescent voltage at the point 64 is effectively maintained at the appropriate voltage level defined by the aforementioned ratio of resistances upstream and downstream of the point 64.

The particular design of the aforementioned circuitry can incorporate any number of specific circuit elements having appropriate values that produce the desired result. The values of the circuit elements particularly used in the preferred embodiment are as follows:

$R_1$ - 470 ohms

$R_2$ - 2.2 mega-ohms

$R_3$ - 470 kilo-ohms

$R_4$ - 20 kilo-ohms

$R_5$ - 390 kilo-ohms

$C_1$ - 10 micro-farads

$C_2$ - 4.7 micro-farads

Referring again to the voltage condition at point 64, it is noted that this condition is applied to the inverting input of a comparator amplifier 67. This amplifier also receives the reference voltage $V_R$ at its non-inverting input. The slight differential at the inputs of the comparator amplifier 67 allow it to respond to a negative voltage spike S, produced by the photosensitive transistor 62 when a nail passing through the feed tube 14 interrupts the beam of light from the light-emitting diode 60. The response of the comparator amplifier 67 is a positive pulse at its output. This positive pulse is inverted by an amplifier 68 so as to produce a negative pulse $P_1$.

It is to be understood that a similar negative pulse will be produced by circuitry associated with each nail sensor 46. Referring to Figure 4, 70 denotes an amplifier corresponding to the amplifier 68 but forming part of a circuit associated with a different nail sensor 46, e.g. that associated with the feed tube 16. In Figure 4 this amplifier 70 is indicated as producing a negative pulse $P_2$.

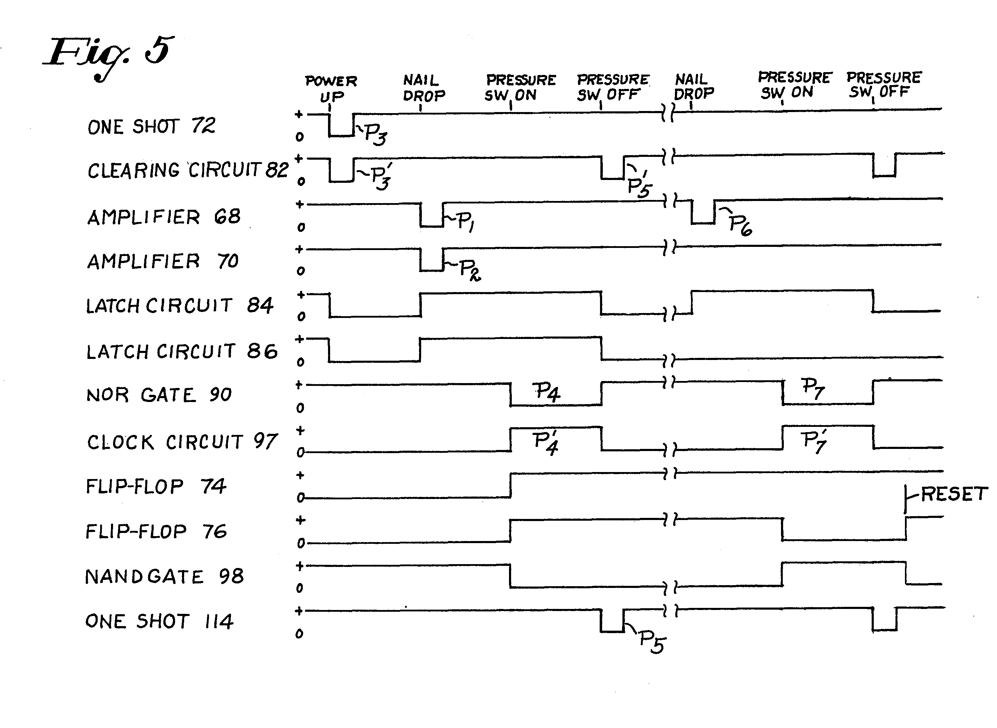

Referring now to Figures 4 and 5, in a cycle of operation a "power up" event is seen to occur first, resulting in a logic level voltage $V_L$ of plus five volts being applied to various terminals of the circuitry in Figure 4, particularly a one shot circuit 72 producing a momentary pulse $P_3$ which is applied to the clear inputs of two D-type flip-flops 74, 76 associated respectively with the amplifiers 68,70. These flip-flops are set logically low as is indicated by their respective output signals in Figure 5. The pulse $P_3$ is also gated through a NAND gate 78 and a buffer amplifier 80 forming part of a pulse-clearing circuit 82. The pulse $P_3$ passing through this circuitry produces a clearing pulse $P'_3$ at the output of the buffer amplifier 80 that is applied to the clear inputs of two latch circuits 84, 86, associated respectively with the amplifiers 68,70.

The circuitry of Figure 4 is now ready to process electrical pulses $P_1$, $P_2$ from the amplifiers 68,70. The pulses $P_1$, $P_2$ occur when a "nail drop" takes place and are applied to the set inputs of the latch circuits 84,86 causing them to be set high.

At this stage the pressure switch 88 is in its normal state (in the absence any pneumatic pressure in the pneumatic actuator). The terminals of the switch 88 define a set of input conditions to two cross-coupled NOR gates 90,92 via lines within the cable 49. Each active terminal of the switch is connected to the logic level voltage source $V_L$ through a respective resistance path 94,95. Depending on the switched condition of the switch 88, one of these NOR gates receives a logically high voltage level $V_L$ whereas the other receives a logically low earthed voltage condition. In the condition shown in Figure 4 the NOR gate 90 receives a logically low input signal and the NOR gate 92 a logically high input signal. Thus the NOR gate 92 has a logically low output which combines with said logically low input signal to the NOR gate 90 to produce a logically high output signal at the NOR gate 90. (The output of a NOR gate is of course only logically high when all inputs thereto are logically low.)

When pneumatic pressure occurs in the actuator which drives the nail loader 28, the pressure switch 88 assumes a differently switched state so that the input to the NOR gate 92 is earthed and the input to the NOR gate 90 rises to the $V_L$ voltage level. This causes the NOR gate 90 immediately to switch low (see Figure 5 at the "pressure switch on" condition) and stays at the logically low signal state (defining a pulse $P_4$) until the pressure switch 88 is switched off. (In this regard, any switch bounce in the pressure switch 88 as a result of actuating the pneumatic actuator will not affect the output of the NOR gate 90.)

The output of the NOR gate 90 is inverted by an amplifier 96, defining a clock pulse output $P'_4$ of clock pulse circuitry 97.

The positive clock pulse $P'_4$ is applied to the clock inputs of the flip-flops 74,76. The leading edge of this pulse will clock in the output signal state of the latch circuits 84,86 which are both logically high at this stage. Both outputs of the flip-flops 74,76 will hence switch logically high. The outputs of the flip-flops 74,76 are applied to a NAND gate 98. (It is to be understood that the outputs of flip-flops (not shown) associated with other nail sensors will also be similarly applied to the NAND gate 98.) If all such inputs to the NAND gate 98 are logically high, indicating that a nail has been previously sensed in each feed tube, then the NAND gate 98 will be logically low. This logically low signal condition will disable a NAND gate 100 from gating an oscillating signal from an oscillator 102.

The outputs of the flip-flops 76,78 are also applied to buffer amplifiers 104,106 defining an appropriate current path from a power voltage source $V_p$ through an appropriate resistance path to lights 108,110 on the display panel 50. In the event that the output of one of the buffer amplifiers is low, as when a nail has been previously detected as having passed through a respective nail tube, current will flow through a respective resistance path and illuminate the associated display light.

When the pneumatic actuator has moved the nail loader 28 to its final position over the nailing station 36, and the pneumatic pressure is switched off, the switch 88 will assume the position illustrated in Figure 4 wherein the input terminal to the NOR gate 90 becomes earthed and the input to the NOR gate 92 rises to the logic level voltage $V_L$. This causes the NOR gate 90 to drop logically low so as to define the trailing edges of both the pulse $P_4$

and the clock pulse $P'_4$. The trailing edge of the pulse $P'_4$ triggers a one shot circuit 115 within the clearing pulse circuitry 82 of Figure 4. The one shot circuit 115 produces a logically low pulse $P_5$ which is gated through the NAND gate 78 and reinverted by the buffer amplifier 80 to produce a clearing pulse $P'_5$ at the output of the clearing circuitry 82. This pulse clears the latch circuits 84,86 causing their outputs to drop logically low as is illustrated in Figure 5.

The next nail drop (shown after the break in Figure 5) produces a pulse $P_6$ at the output of the amplifier 68 indicating that a nail has been appropriately fed through the feed tube 14. A nail has not however passed through the feed tube 16, as is indicated by the absence of a pulse from the amplifier 70. Thus the latch circuit 84 will be set high as a result of receiving the pulse $P_6$ while the latch circuit 86 will remain logically low. When the pressure switch 88 is switched on and generates a pulse $P_7$ at the output of the NOR gate 90 which in turn produces the clock pulse $P'_7$, since the status of the latch circuits is clocked into the flip-flops 74,76 the flip-flop 74 will remain logically high whereas the flip-flop 76 will switch logically low, indicating the absence of a nail at the designated position in the pattern of nails being transferred. The logically low condition of the flip-flop 76 will cause the NAND gate 98 to switch logically high, enabling the NAND gate 100 to gate an oscillating signal from the oscillator 102. The oscillating signal is amplified by a buffer amplifier 117 so as to produce a current through a resistor 119 that switches a transistor 120 on and off. This excites a buzzer 122 as well as a flashing light 124 to alert the operator that one or more nails are missing. The missing nail(s) will be indicated by the light(s) on the display panel 50 that are not illuminated. In the present case, light 110 will not be illuminated because the buffer amplifier 106 is receiving a logically low signal from the flip-flop 76. The operator will quickly be able to identify where a nail is missing since the pattern of lights on the display panel is oriented in the same manner as the pattern of holes in the nailing station.

The operator can now place nails into the respective receiving holes that are indicated as having not received a nail from the nail loader 28. The operator thereafter presses the reset button 54 on the display panel 50, thereby earthing the reset terminals of all the flip-flops 74,76. This will reset the flip-flop circuit 76 logically high, thus producing a logically low signal at the output of the NAND gate 98 which in turn disables the NAND gate 100 so as to turn off the flashing light 124 and buzzer 122. All lights on the display panel 50 will now be illuminated. The shoe parts 42, 44 can now be placed into position with the assurance that a complete pattern of nails will be driven into the thus positioned parts.

CLAIMS:

1. A nailing machine comprising nail transfer means (10) for transferring nails from a first station (12) to a second station (26), the nails being arranged in a nailing pattern at said second station (26), characterised by

nail sensing means (46) for sensing the passage of nails from the first station (12) to the second station (26), and

alerting means (50,122,124) for alerting the operator of the machine at a predetermined time during the machine operation when the passage of a nail has not previously been sensed by the nail sensing means (46).

2. A machine according to Claim 1 further characterised by indicating means (108,110,112,114,116,118) for indicating to the operator at which location in the nailing pattern a nail is missing.

3. A machine according to either one of Claims 1 and 2 further characterised by accounting means (48), responsive to the sensing of the passage of nails by the nail sensing means (46), for accounting for each nail that is to be present in the nailing pattern and effective to cause the alerting means (50,122,124) to be actuated when at least one nail is not accounted for thereby before said predetermined time.

4. A machine according to any one of the preceding Claims wherein the nail transfer means (10) comprises a plurality of feed tubes (14,16,18,20,22,24) defining individual paths for each of a plurality of nails being transferred as aforesaid, characterised in that the nail sensing means (46) comprises a plurality of sensors (46) one associated with each of the feed tubes (14,16,18,20,22,24).

5. A machine according to Claim 4 characterised in that each nail sensor (46) comprises optical sensing means (60,62) and means (67), responsive to the optical sensing means (60,62) sensing the passage of a nail, for generating an electrical pulse signal indicative of such passage.

6. A machine according to Claim 5 characterised in that the nail sensing means (46) further comprises means (66,67) for compensating for changes in the sensitivity of the optical sensing means (60,62).

7. A machine according to Claim 6 characterised in that each nail sensor (46) has means (66,67) associated therewith for compensating for changes in its sensitivity.

8. A machine according to any one of Claims 5 to 7 when tied through Claim 4 to Claim 3 characterised in that the accounting means (48) comprises means (68; 70), responsive to each electrical pulse signal, for generating a further electrical signal and supplying it to the alerting means (50,122,124).

9. A machine according to Claim 8 characterised in that the alerting means (50,122,124) comprises means (74,76,97) for checking each further electrical signal at said predetermined time in the machine operation, and means (98,100,102,117,119) for exciting an alarm (122; 124) when a further electrical signal indicates that the passage of a nail through its feed tube (14; 16; 18; 20; 22; 24) has not been sensed.

19.

10. A machine according to any one of the preceding Claims characterised in that the predetermined time occurs prior to a nailing operation of the machine utilising the particular transfer of nails from the first station (12) to the second station (26).

Fig. 1

0138565

1/4

0138565

2/4

Fig. 2

Fig. 3

Fig. 4

**Fig. 5**

A figure showing timing waveform diagrams for various circuits labeled: ONE SHOT 72, CLEARING CIRCUIT 82, AMPLIFIER 68, AMPLIFIER 70, LATCH CIRCUIT 84, LATCH CIRCUIT 86, NOR GATE 90, CLOCK CIRCUIT 97, FLIP-FLOP 74, FLIP-FLOP 76, NAND GATE 98, ONE SHOT 114. Column headings read POWER UP, NAIL DROP, PRESSURE SW ON, PRESSURE SW OFF, NAIL DROP, PRESSURE SW ON, PRESSURE SW OFF. Pulses labeled $P_3$, $P_3'$, $P_1$, $P_2$, $P_5'$, $P_6$, $P_4$, $P_7$, $P_4'$, $P_7'$, $P_5$, and RESET.

4/4

0138565